# EUROPÄISCHE PATENTANMELDUNG

(11) **EP 1 729 150 A2**
(43) Veröffentlichungstag der Anmeldung: **06.12.2006**
(21) Anmeldenummer: 06010747.1
(22) Anmeldetag: 24.05.2006
(51) Int. Cl.: G01V 1/143

(54) **Seismische Quelle und Verfahren zur Erzeugung seismischer Scherwellen**

(30) Priorität: 27.05.2005 DE 102005024367
(71) Anmelder: GeoForschungsZentrum Potsdam, 14473 Potsdam (DE); Institut für Geowissenschaftliche Gemeinschaftsaufgaben, 30655 Hannover (DE)
(72) Erfinder: Borm, Günter, 76227 Karlsruhe (DE); Giese, Rüdiger, 14715 Schmetzdorf (DE); Otto, Peter, 14471 Potsdam (DE); Jurczyk, Andreas, 14806 Fredersdorf (DE); Polom, Ulrich, 38723 Seesen (DE)
(74) Vertreter: Beier, Ralph

(57) **Zusammenfassung**

Es wird eine seismische Quelle (1) zur Erzeugung von seismischen Schwingungen, insbesondere von Schwerwellen (4), in einem Untersuchungsobjekt (3) beschrieben, die einen Schwingungserzeuger (2), eine mit dem Schwingungserzeuger (2) verbundene Übertragungseinrichtung (12) und mindestens zwei im Wesentlichen parallel zu der Schwingungsausrichtung (x) verschiebliche Lager (20) aufweist. Der Schwingungserzeuger (2) ist dazu vorgesehen, Schwingungen zu erzeugen, die im Wesentlichen parallel zur Oberfläche des Untersuchungsobjekts (3) ausgerichtet sind und ist zur Übertragung der Schwingungen mit der Übertragungseinrichtung (12) verbunden, die wiederum durch eine auf die zwei verschieblichen Lager (20) aufgebrachte Vorspannung gegenüber dem Untersuchungsobjekt (3) vorgespannt wird. Zur Applikation der Schwingungen auf das Untersuchungsobjekt (3) weist die Übertragungseinrichtung (12) ein Kontaktelement (14) auf, dessen Längenausdehnung kleiner ist als der größte Abstand zwischen den zwei Lagern (20).

## Beschreibung

Die Erfindung betrifft eine seismische Quelle gemäß dem Oberbegriff des Anspruchs 1 und ein Verfahren zur Erzeugung seismischer Schwingungen gemäß dem Oberbegriff des nebengeordneten Verfahrensanspruchs.

Seismische Schwingungserzeuger sowie Verfahren zur Erzeugung seismischer Schwingungen werden im Bauwesen insbesondere bei der Modalanalyse zur Materialprüfung und in der geologischen Untergrunderkundung eingesetzt. Besondere Vorteile bieten dabei Schwingungserzeuger, die eine bestimmte Schwingungsform mit einer bestimmten Frequenz gezielt anregen können. Bei der Erzeugung seismischer Schwingungen entstehen Oberflächenwellen und Raumwellen in Form von Kompressionswellen und Scherwellen. Mit zunehmender Eindringtiefe in das Untersuchungsobjekt werden die Oberflächenwellen stark bedämpft. Daher werden für tiefreichende geologische Erkundungen Raumwellen verwendet. Besondere Vorteile bieten Geräte, die gezielt entweder Scherwellen oder Kompressionswellen anregen können, um eine detaillierte Untersuchung zu ermöglichen.

Aus der US 4,771,858 ist ein Scherwellen-Schwingungserzeuger-Isolationssystem bekannt, mit dem eine Vorspannung auf einen Schwingungserzeuger mit einem daran angebrachten Kontaktelement zur Einleitung der Schwingungen in das Erdreich aufbringbar ist. Es wird vorgeschlagen, die Vorspannung über zwei seitlich des Schwingungserzeugers auf dem Kontaktelement angebrachte Lager aufzubringen. Die genannte Patentschrift offenbart verschiedene Lagerungsmöglichkeiten, unter anderem die Verwendung von Kugeln oder Walzen zwischen zwei konkav geformten Grenzflächen. Alternativ wird vorgeschlagen, eine Walze oder ein Rad zwischen zwei ebenen Grenzflächen zu verwenden, wobei eine Nulllage des Kontaktelements gegenüber der Stützeinrichtung durch Federn gewährleistet wird. Nachteilig an den beschriebenen Vorrichtungen ist, dass das Kontaktelement sehr breit ist, da auf der dem Erdreich abgewandten Seite des Kontaktelements nebeneinander die zwei Lager und der Schwingungserzeuger angeordnet sind.

Die große Abmessung des Kontaktelements stellt einen Nachteil dar, da bei der Einbringung von Scherwellen in das Erdreich insbesondere bei der Erzeugung von Schwingungen mit hohen Frequenzen eine kleine Fläche zur Einleitung der Schwingungen in das Erdreich vorteilhaft ist, um eine exakte Schwingungsanregung des Erdreichs zu ermöglichen.

Aus EP 0 015 329 A1, DE 32 17 648 C2, EP 0 397 318 B1, DE 102 35 126 C1, EP 0 278 152 B1 und US 6 105 712 A sind seismische Quellen bekannt, bei denen die Schwingungseinkopplung formschlüssig durch invasive Übertragungselemente erfolgt, die in das Untersuchungsobjekt eindringen und dieses plastisch verformen bzw. beschädigen. Diese bekannten seismischen Quellen ermöglichen jedoch keine eine Ankopplung an glatte, harte Oberflächen, in die die Übertragungselemente nicht eindringen können.

Aus EP 1 235 082 A1 ist weiterhin eine seismische Quelle bekannt, bei der die Erzeugung der seismischen Wellen durch einen sogenannten Impact-Hammer erfolgt, d.h. impulsartig. Nachteilig daran ist die fehlende Möglichkeit einer Einstellung der Bandbreite und der Frequenz.

Der Erfindung liegt daher die Aufgabe zugrunde, die aus dem Stand der Technik bekannten Vorrichtungen zur Erzeugung von seismischen Schwingungen zu verbessern, wobei insbesondere eine einfache Möglichkeit zur verbesserten Einbringung von Scherwellen in ein Untersuchungsobjekt geschaffen werden soll.

Die Aufgabe wird mit einer seismischen Quelle gemäß Anspruch 1 gelöst. Außerdem ist ein Verfahren zur Einleitung seismischer Schwingungen gemäß dem nebengeordneten Anspruch geeignet, die Aufgabe zu lösen.

Die Erfindung geht von der technischen Erkenntnis aus, dass für eine exakte und hochfrequente Schwingungsanregung des Untersuchungsobjekts die maximale Längenausdehnung der auf die Oberfläche des Untersuchungsobjekts aufgesetzten Kontaktfläche möglichst minimiert wird.

Mit Untersuchungsobjekt wird hierin allgemein das Erdreich oder ein Bauwerk bezeichnet, wobei unter dem Begriff Erdreich insbesondere Gestein, Locker- oder Festgestein, Hartgestein oder Lockermaterialien zu verstehen sind. Besondere Vorteile bietet die Erfindung bei Locker- oder Festgestein.

Erfindungsgemäß wird zwischen dem Schwingungserzeuger und der Kontaktfläche eine mit diesen beiden Bauteilen mechanisch verbundene Übertragungseinrichtung angeordnet, welche die Schwingungen von dem Schwingungserzeuger zu der Kontaktfläche überträgt. Dies bietet die Möglichkeit, die Vorspannung auf die Übertragungseinrichtung über zwei im Wesentlichen parallel zu der Schwingungsrichtung des Schwingungserzeugers verschiebliche Lager aufzubringen. Die Abmessungen der Kontaktfläche selbst, die zur Einbringung der Schwingung in das Untersuchungsobjekt vorgesehen ist, können wesentlich kleiner ausfallen als die Übertragungseinrichtung. Erfindungsgemäß ist vorgesehen, dass die maximale Längenausdehnung der auf die Oberfläche des Untersuchungsobjekts aufgesetzten Kontaktfläche kleiner ist als der größte Abstand zwischen zweien der mindestens zwei Lager, über die auf die Übertragungseinrichtung die Vorspannung aufgebracht wird. Die maximale Längenausdehnung bezeichnet dabei bei einer einteiligen Kontaktfläche den Abstand zwischen zwei maximal entfernten Punkten der Kontaktfläche, an der die Oberfläche des Untersuchungsobjekts und das Kontaktelement aufeinander stoßen, oder bei einer mehrteiligen Kontaktfläche den Abstand zwischen zwei maximal entfernten Punkten der mehreren Flächen der Kontaktfläche. Besondere Vorteile bietet es, falls die maximale Längenausdehnung die Hälfte, ein Drittel, Fünftel oder Zehntel des größten Abstandes zwischen zweien der Lager beträgt.

Allgemein ist hierin unter im Wesentlichen parallel eine Ausrichtung zu verstehen, die, soweit technisch realisierbar, exakt parallel ist oder eine Ausrichtung, die gegenüber der Parallelen um 3° oder 5° geneigt ist. Dies gilt analog auch für den Ausdruck "im Wesentlichen senkrecht zu".

Erfindungsgemäß werden die Schwingungen in einem Schwingungserzeuger mit einer vorgegebenen Schwingungsrichtung, die im Wesentlichen parallel zu der Oberfläche des Untersuchungsobjekts ist, erzeugt. Der Schwingungserzeuger ist mechanisch mit der Übertragungseinrichtung verbunden, auf die auch die Vorspannung über die zwei verschieblichen Lager wirkt. Vorteilhaft ist eine Anordnung von mindestens drei verschieblichen, eine Ebene definierenden Lagern mit einem Freiheitsgrad in Schwingungsrichtung. Auf diese Weise wird eine zuverlässige Lagerung der Übertragungseinrichtung gewährleistet. Besonders bevorzugt werden vier Lager angeordnet.

Die Kontaktfläche zwischen dem Kontaktelement und dem Untersuchungsobjekt kann dabei eben oder gekrümmt sein, wobei sowohl quadratische, rechteckige als auch Kontaktflächen mit mehr oder weniger als vier Ecken geeignet sein können, um die Schwingungen in das Untersuchungsobjekt zu übertragen. Eine gekrümmte Fläche als Kontaktfläche kommt insbesondere bei der Einbringung von Schwingungen in Gestein in Frage, da bei Gestein nur eine geringe Kontaktfläche notwendig ist, um die auftretenden Kräfte zu übertragen und außerdem die Krümmung bei einem Aufsetzen in eine Gesteinsmulde einen zusätzlichen Widerstand gegen ein Verrutschen der Kontaktfläche auf dem Gestein als anzuregendes Untersuchungsobjekt bildet. Besonders vorteilhaft ist eine Kontaktfläche von weniger als 100 cm² oder weniger als 500 cm². Die Anordnung eines Profils auf der Kontaktfläche bietet den Vorteil eines besseren Reibschlusses mit der Oberfläche des Untersuchungsobjekts. Vorzugsweise umfasst das Profil eine Zahnung.

Vorteilhafterweise ist der Schwingungserzeuger starr mit der Übertragungseinrichtung verbunden, um eine zuverlässige Übertragung der Schwingungen von dem Schwingungserzeuger auf die Übertragungseinrichtung zu gewährleisten. Es kann dabei vorgesehen sein, dass die Verbindung zwischen dem Schwingungserzeuger und der Übertragungseinrichtung parallel zu der Schwingungsrichtung des Schwingungserzeugers steifer ausgeführt ist als senkrecht zur Schwingungsrichtung, beispielsweise mit einem Verhältnis von mindestens 10:1. Dies bietet den Vorteil, dass die zur Erzeugung der Scherwellen notwendigen Schwingungen übertragen werden, wohingegen andere Schwingungen senkrecht zu der Schwingungsrichtung des Schwingungserzeugers gedämpft werden.

Vorzugsweise wird die Kontaktfläche von einem Kontaktelement gebildet, das durch eine starre und/oder lösbare Befestigung mit der Übertragungseinrichtung verbunden ist. Eine starre Befestigung ist vorteilhaft, da mit der starren Befestigung die Schwingungen von der Übertragungseinrichtung exakt über das Kontaktelement in das Untersuchungsobjekt eingeleitet werden können. Eine lösbare Befestigung des Kontaktelements mit der Übertragungseinrichtung ist vorteilhaft, da in diesem Fall das Kontaktelement ausgetauscht werden kann, um das Kontaktelement an das jeweilige Untersuchungsobjekt anzupassen. Es kann vorgesehen sein, dass für weiche Untergründe ein Kontaktelement mit einer größeren Kontaktfläche verwendet wird als bei einer Erregung von Scherwellen in Gestein. Die lösbare Befestigung kann beispielsweise durch Bolzen oder Schrauben verwirklicht werden, mit denen das Kontaktelement an der Übertragungseinrichtung befestigt wird.

Vorteilhafterweise weist die seismische Quelle eine Stützeinrichtung auf, mit der die Vorspannung auf die Übertragungseinrichtung durch die mindestens zwei Lager aufgebracht wird. Die Stützeinrichtung bringt hierbei eine Vorspannung über die Lager auf die Übertragungseinrichtung auf, die im Wesentlichen senkrecht zu der Oberfläche des Untersuchungsobjekts und zu der Verschiebungsrichtung des Lagers ausgerichtet ist. Die Stützeinrichtung kann beispielsweise ein Joch umfassen, das seitlich um den mittig angeordneten Schwingungserzeuger herumgreift, wobei das Joch beidseitig oder im Fall von vier Lagern an vier Ecken eines imaginären Rechtecks neben dem Schwingungserzeuger auf die Lager drückt.

Vorzugsweise ist zumindest eine Rückstellfeder zwischen der Übertragungseinrichtung und der Stützeinrichtung angeordnet, die in Richtung der Verschieblichkeit der Lager wirkt. Besondere Vorteile bietet es, wenn die Rückstellfeder eine mittige Nulllage aufeist, so dass die Rückstellfeder eine rückstellende Kraft in Richtung der Verschieblichkeit des Lagers bewirkt, falls die Übertragungseinrichtung gegenüber der Stützeinrichtung aus einer Mittellage heraus verschoben ist. Auf diese Weise wird erreicht, dass bei einer geringfügig schiefstehenden Kraft zur Aufbringung der Vorspannung ein Ausweichen der Stützeinrichtung verhindert wird. Weiterhin bietet die Anordnung der Rückstellfeder den Vorteil, dass die seismische Quelle im vom Untersuchungsobjekt abgehobenen Zustand in eine definierte Mittellage gebracht wird. Auf diese Weise ist gewährleistet, dass bei jedem neuen Aufsetzen der seismischen Quelle auf das Untersuchungsobjekt die seismische Quelle in einer definierten Ausgangslage angeordnet ist. Die Rückstellfeder kann beispielsweise durch eine klassische Spiralfeder gebildet sein, die in der Nähe eines Lagers angebracht wird. Vorteilhafterweise wird jedes Lager mit einer Rückstellfeder ausgerüstet, um Verspannungen und Verkantungen im Bereich der Lager zu vermeiden. Weiterhin können an einem Lager mehrere Rückstellfedern vorgesehen werden oder die Rückstellfedern an einer beliebigen anderen Stelle zwischen der Übertragungseinrichtung und der Stützeinrichtung angebracht werden.

Vorzugsweise ist die Rückstellfeder so abgestimmt, dass die Übertragungseinrichtung von der Stützeinrichtung schwingungsentkoppelt ist. Dies bietet den Vorteil, dass die durch den Schwingungserzeuger erzeugten Schwingungen nicht auf die Stützeinrichtung übertragen werden oder zumindest nur ein geringer Teil der Schwingungen auf die Stützeinrichtung übertragen werden. Vorteilhafterweise liegt die Resonanzfrequenz der bewegten Teile der seismischen Quelle mit der Rückstellfeder unterhalb der eingesetzten Erregerfrequenzen, d.h. dass das System tief abgestimmt wird. Besondere Vorteile ergeben sich, wenn die Resonanzfrequenz kleiner ist als 1/√2 mal der Erregerfrequenz. Hierdurch wird die Schwingungsübertragung bereits durch die Abstimmung des schwingungsfähigen Systems stark vermindert.

Vorzugsweise wird das Lager als elastisches Verschiebungslager ausgeführt. Elastische Verschiebungslager sind beispielsweise aus dem Brückenbau bekannt und umfassen im Allgemeinen eine Gummischicht, die zwischen den betreffenden Bauteilen angeordnet ist, wobei eine Verschiebung quer zu den Lasteinleitungsflächen des Verschiebungslagers durch ein Abscheren der Gummischicht des Verschiebungslagers möglich ist. Diese Lager bieten den Vorteil, dass sie billig herzustellen sind und widerstandsfähig sind. Weiterhin bieten sie den Vorteil, dass sie eine Rückstellkraft aufweisen, so dass das Lager und die Rückstellfeder in einem Bauteil ausgeführt werden können. Alternativ kann beispielsweise auch ein einfaches Gleitlager oder allgemein aus dem Maschinenbau bekannte Linearführungen eingesetzt werden.

Vorteilhafterweise umfasst das elastische Verschiebungslager zwei metallische Deckplatten und einen zwischen den metallischen Deckplatten angeordneten Gummi. Die metallischen Deckplatten bieten den Vorteil, dass das Verschiebungslager leicht zu montieren ist.

Vorteilhafterweise umfasst die Stützeinrichtung oder die Übertragungseinrichtung eine Führung für den Schwingungserzeuger. Der Schwingungserzeuger wird durch die Führung radial bezüglich der Schwingungsrichtung gehalten, wobei in axialer Richtung eine freie Beweglichkeit des Schwingungserzeugers vorgesehen ist. Der Schwingungserzeuger ist an einem Ende an der Übertragungseinrichtung befestigt und umfasst in seinem Inneren ein längenverstellbares Element, an dem eine in Schwingungsrichtung bewegliche Masse angebracht ist. Falls diese in Schwingungsrichtung bewegliche Masse starr mit dem Gehäuse des Schwingungserzeugers verbunden ist, weist die oben beschriebene Lagerung des Schwingungserzeugers den Vorteil auf, dass die Bewegung der Gegenmasse in Schwingungsrichtung nicht behindert wird. Alternativ ist es auch möglich, den Schwingungserzeuger lediglich an der Übertragungseinrichtung zu befestigen, so dass der Schwingungserzeuger ansonsten frei im Raum angeordnet ist. Eine weitere Möglichkeit ist, dass der Schwingungserzeuger ein von der Gegenmasse getrenntes Gehäuse aufweist, das in diesem Fall fest mit der Übertragungseinrichtung oder der Stützeinrichtung verbunden werden kann, wobei zu beachten ist, dass zwischen der Stützeinrichtung und der Übertragungseinrichtung der Freiheitsgrad bezüglich der Schwingungsrichtung des Schwingungserzeugers nicht gesperrt werden darf.

Falls die Stützeinrichtung eine längenverstellbare Andrückeinrichtung umfasst, so bietet dies den Vorteil, dass die Vorspannung mit dieser längenverstellbaren Andrückeinrichtung aufgebracht werden kann. Die Stützeinrichtung ist dabei so gestaltet, dass sie an einem Ende auf das Lager wirken kann und an dem anderen Ende eine Befestigungsvorrichtung aufweist, an der die seismische Quelle befestigt werden kann. Zwischen der Befestigungseinrichtung und dem Lager ist die längenverstellbare Andrückeinrichtung angeordnet, um die Übertragungseinrichtung mit dem Schwingungserzeuger und dem Kontaktelement auf das Untersuchungsobjekt aufzusetzen oder von diesem abzuheben. Die Andrückeinrichtung ist vorteilhafterweise im Wesentlichen senkrecht zur Schwingungsrichtung des Schwingungserzeugers und/oder im Wesentlichen senkrecht zur Oberfläche des Untersuchungsobjekts längenverstellbar.

Vorzugsweise umfasst die Andrückeinrichtung einen Hubzylinder zum Aufbau der Vorspannung. Ein Hubzylinder bietet den Vorteil, dass er bei geringen Maßen die Möglichkeit bietet, eine hohe Kraft aufzubauen. Weiterhin ist es möglich, Hubzylinder weggesteuert oder kraftgesteuert anzusteuern, wobei in dem Anwendungsfall der seismischen Quelle eine Kraftsteuerung bevorzugt wird, um die Vorspannung mit einer wählbaren Vorspannkraft aufzubauen. Als Hubzylinder können vorteilhafterweise Hydraulikzylinder oder Pneumatikzylinder verwendet werden. Ein Pneumatikzylinder bietet den Vorteil, dass kein Hydrauliköl auslaufen kann. Daher ist ein Pneumatikzylinder besonders dazu geeignet, im freien Gelände eingesetzt zu werden. Ein Hydraulikzylinder bietet die Möglichkeit, sehr große Kräfte zu erzeugen. Allgemein wird hierin unter Vorspannung verstanden, dass die seismische Quelle mit einer Vorspannkraft gegen das Untersuchungsobjekt gedrückt wird, wobei die Kraft in der Fuge zwischen seismischer Quelle und dem Untersuchungsobjekt durch das Eigengewicht der seismischen Quelle und/oder durch den Betrieb der seismischen Quelle beeinflusst werden kann. In der Fuge wirkt daher die Vorspannkraft der Vorspannung zusammen mit anderen Kräften, wobei die Vorspannkraft so zu wählen ist, dass der Reibschluss in der Fuge ständig in allen Betriebszuständen gewährleistet ist.

Vorzugsweise ist die Andrückeinrichtung mit einer Kraftregeleinheit verbunden, mit der die Vorspannkraft für die Vorspannung einstellbar ist. Die Vorspannung wird von der Kraftregeleinheit kraftgeregelt, wobei die Kraftregeleinheit laufend einen Mittelwert der durch die Andrückeinrichtung ausgeübten Kraft aufzeichnet, um die Andrückeinrichtung so anzusteuern, dass dieser Mittelwert einem voreingestellten Mittelwert für die Vorspannkraft entspricht.

In einer bevorzugten Ausführungsform der seismischen Quelle wird in oder an der Übertragungseinrichtung ein Schwingungsaufnehmer angeordnet, um die Schwingungen der Übertragungseinrichtung zu ermitteln. Insbesondere ist dabei vorgesehen, dass die Schwingungen in Richtung der Schwingungsrichtung des Schwingungserzeugers aufgenommen werden. Es ist auch möglich, Schwingungen in anderen Richtungen aufzunehmen, beispielsweise um den einwandfreien Betrieb der seismischen Quelle zu überwachen. Der Schwingungsaufnehmer bietet den Vorteil, dass überprüft werden kann, ob die von dem Schwingungserzeuger erzeugten und von der Übertragungseinrichtung übertragenen Schwingungen einer gewünschten Vorgabe entsprechen. Besondere Vorteile bietet die Anordnung eines Schwingungsaufnehmers an dem Kontaktelement, da am Kontaktelement die in das Untersuchungsobjekt eingeleiteten Schwingungen besonders zuverlässig erfasst werden können.

Vorteilhafterweise wird der Schwingungsaufnehmer ausgangsseitig mit dem Eingang einer Regeleinrichtung zur Steuerung des Schwingungserzeugers verbunden, um den Schwingungserzeuger geregelt anzusteuern. Dies bietet den Vorteil, dass beispielsweise bei einer nicht ausreichend großen Amplitude der Schwingungserzeuger mit mehr Leistung versorgt werden kann, um die Amplitude der erzeugten Schwingung zu vergrößern. Vorteilhaft ist eine Steuerung des Schwingungserzeugers mit einer Steuerungseinrichtung, wobei auf diese Weise Schwingungen mit einer steuerbaren Frequenz und Amplitude erzeugt werden können. Eine Steuerung bietet den Vorteil eines einfachen Aufbaus.

Vorzugsweise wird eine Schwingungszustandsgröße ermittelt, welche die Schwingungen der Übertragungseinheit als Antwort auf eine Schwingungsstellgröße des Schwingungserzeugers wiedergibt. Besondere Vorteile ergeben sich, wenn ein Vergleich der ermittelten Schwingungszustandsgröße mit der Schwingungsstellgröße vorgenommen wird und der Schwingungserzeuger in Abhängigkeit von de Ergebnis des Vergleichs angesteuert wird, so dass die durch die Übertragungseinrichtung übertragenen Schwingungen möglichst der Vorgaben der Schwingungsstellgröße entsprechen.

Vorzugsweise wird der Schwingungserzeuger mit einer periodischen Schwingungsstellgröße mit einer variablen Frequenz angesteuert. Beispielsweise kann der Schwingungserzeuger mit einer Frequenz angesteuert werden, die kontinuierlich von 100 bis 8.000 Hz reicht. Dies bietet den Vorteil, dass bei der seismischen Erkundung des Untersuchungsobjekts mit unterschiedlichen Frequenzen gearbeitet wird. Dabei ist zu berücksichtigen, dass die Übertragungseigenschaften des Untersuchungsobjekts für unterschiedliche Frequenzen verschieden sind, so dass sich durch eine Untersuchung mit verschiedenen Frequenzen detailreichere Aufschlüsse über den Zusammenbau des Untersuchungsobjekts ergeben können. Vorzugsweise ist auch die Amplitude der erzeugten Schwingungen einstellbar, wobei der Schwingungserzeuger mit einer einstellbaren Amplitude ansteuerbar ist.

Besondere Vorteile bietet der Einsatz eines magnetostriktiven Schwingungserzeugers. Bei der Schwingungserzeugung mit einem magnetostriktiven Material können sehr hohe Schwingungsenergien umgesetzt werden, wobei hohe Anregungsfrequenzen bis zu 8 kHz oder darüber möglich sind. Weiterhin können auch piezoelektrische, elektrodynamische oder hydromechanische Schwingungserzeuger eingesetzt werden. Piezoelektrische Schwingungserzeuger bieten den Vorteil, dass sie sehr hohe Frequenzen erzeugen können. Hydromechanische Schwingungserzeuger bieten den Vorteil, dass sie große Schwingkräfte erzeugen können. Die Erfindung ist jedoch zu unterscheiden von bekannten seismischen Quellen, bei denen die mechanische Anregung stoßartig durch sogenannte Impact-Hammer erfolgt, so dass das Frequenzspektrum der Anregung nicht eingestellt werden kann.

Besonders bevorzugt wird ein magnetostriktiver Schwingungserzeuger, dessen magnetostriktives Material im Inneren eines Gehäuses angeordnet ist, über den das magnetostriktive Material vorgespannt ist und das als Gegenmasse bei der Schwingungserzeugung fungiert. In diesem Fall wird vorteilhafterweise eine in Richtung der Schwingungserzeugung verschiebliche Lagerung zwischen dem Gehäuse des Schwingungserzeugers und der Übertragungseinrichtung oder der Stützeinrichtung vorgesehen.

Vorzugsweise weist der Schwingungserzeuger eine Maximalleistung von mindestens 1 kW auf, besonders bevorzugt wird ein Schwingungserzeuger mit einer Maximalleistung von mindestens 2 kW. Eine hohe Leistung des Schwingungserzeugers bietet den Vorteil, dass besonders starke seismische Schwingungen hervorgerufen werden können, wodurch die Messgenauigkeit an einem entfernten Messort aufgrund der höheren Amplituden verbessert wird.

Vorteilhafterweise ist der Schwingungserzeuger in zwei Massen aufgeteilt. Eine Masse ist dabei mit der Übertragungseinrichtung starr verbunden und eine Gegenmasse ist in Schwingungsrichtung des Schwingungserzeugers frei beweglich. Die Masse und die Gegenmasse sind dabei über einen schwingungserzeugenden Antrieb verbunden.

Vorteilhafterweise wird die Stützeinrichtung drehbar gelagert, so dass die seismische Quelle mit der Stützeinrichtung, der Übertragungseinrichtung, dem Schwingungserzeuger und dem Kopplungselement um eine Achse gedreht werden kann, die im Wesentlichen senkrecht zu der Oberfläche des Untersuchungsobjekts steht. Dies ermöglicht eine Anregung von Scherwellen mit unterschiedlichen Polarisationsrichtungen im Raum. Vorzugsweise ist die drehbare Lagerung der Stützeinrichtung so eingerichtet, dass sie eine Verdrehung um mindestens 180° erlaubt. Auf diese Weise können Scherwellen in alle beliebigen Polarisationsebenen erzeugt werden. Die drehbare Lagerung kann beispielsweise der drehbare Kopf eines Baggerarmes sein. Alternativ kann die drehbare Lagerung auch an der Stützeinrichtung vorgesehen sein. Vorzugsweise ist die Stützeinrichtung um drei Achsen drehbar gelagert, so dass die seismische Quelle beliebig positioniert werden kann.

Ein unabhängiger Gegenstand der Erfindung ist auch eine Maschine mit einer drehbaren Lagerung, an der die Stützeinrichtung einer der oben beschriebenen seismischen Quellen befestigt ist, wobei die seismische Quelle mit der drehbaren Lagerung um eine im Wesentlichen senkrecht zur Oberfläche des Untersuchungsobjekts stehende Achse drehbar ist. Die Maschine kann beispielsweise ein Bagger mit einem Baggerarm sein, an dessen Ende ein drehbarer Kopf zur Montage der seismischen Quelle vorgesehen ist. Vorteilhafterweise weist die Maschine einen beweglichen Arm mit einem drehbaren Kopf auf, wobei mit dem beweglichen Arm eine Positionierung der seismischen Quelle in jeder beliebigen Raumrichtung möglich ist, so dass beispielsweise auch eine Erzeugung von Scherwellen oberhalb einer Tunneldecke durch Aufsetzen der seismischen Quelle an der Tunneldecke möglich ist.

Weiterhin ist eine Verwendung einer der oben beschriebenen Ausführungsformen der seismischen Quelle oder der Maschine zur Erzeugung von seismischen Schwingungen, insbesondere von Scherwellen, in einem Untersuchungsobjekt ein unabhängiger Gegenstand der Erfindung.

Ein weiterer unabhängiger Gegenstand der Erfindung bildet ein Verfahren zur Erzeugung von seismischen Schwingungen in einem Untersuchungsobjekt.

Eine erfindungsgemäße seismische Quelle und das erfindungsgemäße Verfahren werden anschließend anhand der beigefügten Abbildung näher erläutert.

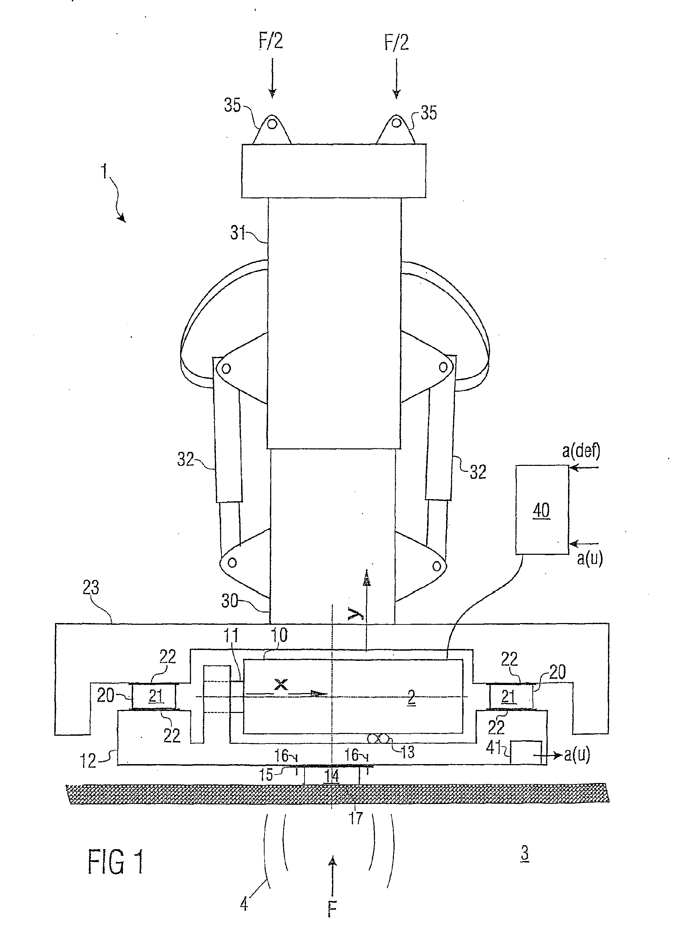

- Figur 1: zeigt schematisch eine Ausführungsform einer erfindungsgemäßen seismischen Quelle.

In Figur 1 ist eine Seitenansicht einer seismischen Quelle 1 dargestellt. Die seismische Quelle 1 verfügt über einen magnetostriktiven Schwingungserzeuger 2, der mit seiner Schwingungsrichtung parallel zu der Oberfläche des Erdreichs 3 angeordnet ist. Im Erdreich 3 entstehen Scherwellen 4 durch eine tangentiale Bewegung der seismischen Quelle 1 an der Oberfläche des Erdreichs 3. Der Schwingungserzeuger 2 umfasst eine Gehäusewand 10 und einen relativ zu der Gehäusewand 10 beweglichen Kopf 11. Der Kopf 11 ist starr mit einer Übertragungseinrichtung 12 verschraubt. Weiterhin ist der Schwingungserzeuger 2 gegenüber der Übertragungseinrichtung 12 an seiner Gehäusewand 10 mit einem Rollenlager 13 gelagert.

Beim Betrieb des Schwingungserzeugers 2 bewegt das magnetostriktive Material des Schwingungserzeugers 2 eine Gegenmasse parallel zu der Oberfläche des Erdreichs 3 (Richtung x) relativ zu dem Kopf 11. Dadurch wird die Übertragungseinrichtung 12 zu Schwingungen in dieser Richtung (Richtung x) angeregt. Die Übertragungseinrichtung 12 überträgt die Schwingungen auf ein Kontaktelement 14, das mit einer an dem Kontaktelement 14 angebrachten Befestigungsplatte 15 und Bolzen 16 an der Übertragungseinrichtung 12 befestigt ist. Das Kontaktelement 14 lässt sich durch Lösen der Bolzen 16 von der Übertragungseinrichtung 12 abmontieren. Dadurch wird die Möglichkeit geschaffen, ein anders aufgebautes Kontaktelement anstelle des Kontaktelements 14 zu verwenden.

Das Kontaktelement 14 sitzt mit einer Berührungsfläche 17 auf der Oberfläche des Erdreichs 3 auf. Die Berührungsfläche 17 misst 10cm x 5cm und leitet die Schwingungen in das Erdreich ein. Da die Schwingungsrichtung parallel zur Oberfläche des Erdreichs 3 ist, muss das Kontaktelement 14 mit einer ausreichenden Kraft auf der Oberfläche des Erdreichs 3 aufgesetzt werden, so dass durch Reibschluss zwischen dem Kontaktelement und der Oberfläche eine zuverlässige Einleitung der Schwingungen gewährleistet ist. Der Reibschluss in der Fuge zwischen dem Kontaktelement 14 und der Oberfläche wird durch eine Vorspannung des Kontaktelements 14 gegenüber dem Erdreich und eine Zahnung des Kontaktelements 14 erreicht.

Die Vorspannung wird ebenfalls über die Übertragungseinrichtung 12 auf das Kontaktelement 14 aufgebracht, wobei das Übertragungselement 12 vier jeweils an den Ecken eines Quadrats angeordnete elastische Verschiebungslager 20 aufweist, von denen nur zwei dargestellt sind, da die anderen zwei in der Seitenansicht der Figur 1 verdeckt sind. Die Verschiebungslager 20 weisen einen Abstand von jeweils 0,5 m auf. Zwischen den Verschiebungslagern 20 ist der Schwingungserzeuger 2 angeordnet. Die Verschiebungslager 20 umfassen eine mittig in den Verschiebungslagern 20 angeordnete Gummischicht 21 und jeweils zwei stählerne Lasteinleitungsplatten 22, zwischen denen die Gummischicht 21 angeordnet ist. Eine der Lasteinleitungsplatten 22 ist jeweils an der Übertragungseinrichtung 12 montiert. Die andere der Lasteinleitungsplatten 22 ist an einer jochförmigen Stützeinrichtung 23 montiert. Die jochförmige Stützeinrichtung 23 umspannt berührungslos den Schwingungserzeuger 2 und bringt eine zu der Oberfläche des Erdreichs 3 senkrecht stehende Kraft als Vorspannung auf die Lager 20 auf. Die Lager 20, die Übertragungseinrichtung 12 und die Stützeinrichtung 23 sind auf eine Kraft in Richtung der Vorspannung von 20 kN ausgelegt. Im Betrieb werden mit dem magnetostriktiven Schwingungserzeuger 2 Frequenzen zwischen 100 Hz und 8 kHz erzeugt, wobei der Schwingungserzeuger 2 eine Nennleistung von 1 kW aufweist.

Damit die Übertragungseinrichtung 12 und das Kontaktelement 14 eine definierte Ausgangslage relativ zu der Stützeinrichtung 23 einnehmen, falls keine äußeren Kräfte in x-Richtung wirken und falls der Schwingungserzeuger 2 abgestellt ist, sind die Verschiebungslager 20 elastische Verschiebungslager 20. Falls die Verschiebungslager 20 aus ihrer Ruhelage in x-Richtung verschoben werden, entwickeln sie eine rückstellende Kraft, so dass die Übertragungseinrichtung 12 aus der verschobenen Lage wieder in die ursprüngliche Lage zurück geschoben wird. Die Gesamtsteifigkeit der elastischen Verschiebungslager 20 beträgt in x-Richtung etwa 1,8 kN/mm. Die Steifigkeit der Verschiebungslager 20 in die zu der Oberfläche des Erdreichs 3 senkrecht stehenden y-Richtung ist mindestens 10 mal so groß.

Der besondere Vorteil des großen Abstands der Verschiebungslager 20 ist, dass auf diese Weise Kippmomente, die bei dem Betrieb des Schwingungserzeugers 2 aufgrund der Außermittigkeit der Krafteinleitung bei der Schwingungserzeugung zwischen dem Schwingungserzeuger 2 und dem Kontaktelement 14 entstehen, mit geringen Lagerkräften in den Verschiebungslagern 20 aufgenommen werden. Durch den großen Hebelarm der Verschiebungslager 20 bewirkt das periodisch wechselnde Kippmoment nur geringe Kräfte in den Verschiebungslagern 20 in y-Richtung.

An der Stützeinrichtung 23 ist ein Halterohr 30 mit einem runden Querschnitt angeflanscht. Das Halterohr 30 dient zur Halterung der Stützeinrichtung 23 und zur Aufbringung der Vorspannung. Das Halterohr 30 ist in ein Führungsrohr 31 eingesteckt, wobei sich das Halterohr 30 bezüglich des Führungsrohrs 31 in y-Richtung bewegen kann. Zur Verschiebung des Halterohrs 30 in dem Führungsrohr 31 sind das Halterohr 30 und das Führungsrohr 31 durch zwei Hubzylinder 32 verbunden. Die Hubzylinder 32 können kraftgesteuert werden, so dass die Kraft der Vorspannung einstellbar ist. Außerdem kann durch Verkürzen der Hubzylinder 32 das Kontaktelement 14 von der Oberfläche des Erdreichs 3 abgehoben werden.

Bei abgehobenem Kontaktelement 14 kann die seismische Quelle 1 um eine zur Y-Richtung parallele Achse gedreht werden. Nach einer Drehung der seismischen Quelle 1 um diese Achse kann die seismische Quelle 1 mit dem Kontaktelement 14 wieder auf die Oberfläche des Erdreichs 3 aufgesetzt werden. Durch eine Drehung um beispielsweise 30° lassen sich dann Scherwellen in dem Erdreich 3 erzeugen, die gegenüber den in der Figur 1 gezeigten Scherwellen 4 eine um 30° gedrehte Polarisation aufweisen. Zur Drehung der seismischen Quelle 1 wird ein drehbarer Baggerkopf eines Baggers (nicht dargestellt) verwendet, an dem die seismische Quelle 1 mit vier Flanschen 35 befestigt ist, wobei in der Seitenansicht der Figur 1 lediglich zwei Flansche 35 dargestellt sind. Bagger und drehbare Baggerköpfe sind aus dem Stand der Technik bekannt und allgemein erhältlich. Der Bagger, an dem die beiden Flansche 35 befestigt sind, stellt auch das Wiederlager für die Kraft der Vorspannung dar. Durch den Baggerarm ist es auch möglich, die seismische Quelle an beliebig geneigten Oberflächen des Erdreichs aufzusetzen, wobei z.B. auch ein Betrieb über Kopf an einer Tunneldecke möglich ist.

Der magnetostriktive Schwingungserzeuger2 wird von einer Regeleinrichtung 40 angesteuert. Die Regeleinrichtung 40 steuert den magnetostriktiven Schwingungserzeuger 2 beispielsweise mit einem Sinussignal an, das eine veränderliche Frequenz aufweist, wobei fortlaufend der Frequenzbereich von 100 Hz bis 8 kHz durchfahren wird. Ein Schwingungsaufnehmer 41 ermittelt die Beschleunigungen a(u) der Übertragungseinrichtung 12. Die Regeleinrichtung 40 vergleicht die von dem Schwingungsaufnehmer 41 ermittelten Daten mit einem vorgegebenen Beschleunigungssignal a(def). Falls die Regeleinrichtung 40 ermittelt, dass die Beschleunigung a(u) nicht der vorgegebenen Beschleunigung a(def) entspricht, so regelt die Regeleinrichtung 40 die Ansteuerung des magnetostriktiven Schwingungserzeugers 2 nach (Soll-Ist-Vergleich mit Regelung). Auf diese Weise wird jederzeit eine exakte Schwingungserzeugung gewährleistet.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Seismische Quelle (1) zur Erzeugung von seismischen Schwingungen in Form von Scherwellen (4) in einem Untersuchungsobjekt (3), wobei die seismische Quelle (1) auf eine Oberfläche des Untersuchungsobjekts (3) aufsetzbar ist und umfasst:
a) eine Anregungsquelle (2) zur Erzeugung einer mechanischen Anregung mit einer vorgegebenen Anregungsrichtung, die im Wesentlichen parallel zu der Oberfläche des Untersuchungsobjekts (3) ausgerichtet ist,
b) eine Übertragungseinrichtung (2), die mit der Anregungsquelle (2) mechanisch verbunden ist und die Anregung von der Anregungsquelle (2) ausgehend überträgt,
c) mindestens zwei Lager (2), die im Wesentlichen parallel zu der Anregungsrichtung verschieblich sind und über die auf die Übertragungseinrichtung (12) eine mechanische Vorspannung aufbringbar ist, so dass die Übertragungseinrichtung (12) gegenüber dem Untersuchungsobjekt (3) mechanisch vorgespannt wird, sowie
d) eine einteilige oder mehrteilige Kontaktfläche (17), mit der die Übertragungseinrichtung (12) auf das Untersuchungsobjekt (3) aufsetzbar ist und über die die Anregungen reibschlüssig in das Untersuchungsobjekt (3) eingekoppelt werden, wobei die Kontaktfläche (17) eine bestimmte maximale Längenausdehnung aufweist, die kleiner ist als der größte Abstand zwischen den Lagern (20),
**dadurch gekennzeichnet, dass**
e) die Anregungsquelle (2) ein Schwingungserzeuger ist, der als Anregung eine kontinuierliche Schwingung erzeugt.

2. Seismische Quelle (1) nach Anspruch 1, **dadurch gekennzeichnet, dass** die Kontaktfläche (17) von einem Kontaktelement (14) gebildet wird, das durch eine starre und/oder lösbare Befestigung (15, 16) mit der Übertragungseinrichtung (12) verbunden ist.

3. Seismische Quelle (1) nach einem der vorhergehenden Ansprüche, **gekennzeichnet durch** eine Stützeinrichtung (23) zur Aufbringung der Vorspannung auf die Übertragungseinrichtung (12) **durch** die Lager (20), wobei die Vorspannung im Wesentlichen senkrecht zu der Oberfläche des Untersuchungsobjekts (3) und zu der Verschiebungsrichtung der Lager (20) ausgerichtet ist.

4. Seismische Quelle (1) nach einem der vorangegangenen Ansprüche, **gekennzeichnet durch** eine Rückstellfeder, welche zwischen die Übertragungseinrichtung (12) und der Stützeinrichtung (23) angeordnet ist und eine Rückstellung der Übertragungseinrichtung (12) in eine Mittellage gegenüber der Stützeinrichtung (23) bewirkt, falls die Übertragungseinrichtung (12) in der Verschiebungsrichtung der Lager (20) verschoben ist.

5. Seismische Quelle (1) nach Anspruch 4, **dadurch gekennzeichnet, dass** die Rückstellfeder abgestimmt ist, so dass die Übertragungseinrichtung (12) von der Stützeinrichtung (23) schwingungsentkoppelt ist.

6. Seismische Quelle (1) nach einem der vorangegangenen Ansprüche, **dadurch gekennzeichnet, dass** die Lager (20) als elastische Verschiebungslager (20) ausgeführt sind.

7. Seismische Quelle (1) nach Anspruch 6, **dadurch gekennzeichnet, dass** das elastisches Verschiebungslager (20) zwei metallische Deckplatten (22) und einen zwischen den metallischen Deckplatten angeordneten Gummi (21) umfasst.

8. Seismische Quelle (1) nach einem der Ansprüche 3 bis 7, **dadurch gekennzeichnet, dass** die Stützeinrichtung (23) und/oder die Übertragungseinrichtung (12) eine Führung (13) für den Schwingungserzeuger (2) aufweist, wobei der Schwingungserzeuger (2) durch die Führung (13) radial bezüglich der Schwingungsrichtung gehalten wird und in axialer Richtung sich im Wesentlichen frei bewegen kann.

9. Seismische Quelle (1) nach einem der Ansprüche 3 bis 8, **dadurch gekennzeichnet, dass** die Stützeinrichtung (23) eine längenverstellbare Andrückeinrichtung (32) umfasst, um die Vorspannung aufzubringen.

10. Seismische Quelle (1) nach Anspruch 9, **dadurch gekennzeichnet, dass** die Andrückeinrichtung (32) einen Hubzylinder (32) zum Aufbau der Vorspannung umfasst.

11. Seismische Quelle (1) nach einem der Ansprüche 9 oder 10, **gekennzeichnet durch** eine mit der Andrückeinrichtung (32) verbundene Kraftregeleinheit, so dass die Vorspannung kraftgeregelt werden kann.

12. Seismische Quelle (1) nach einem der vorhergehenden Ansprüche, **gekennzeichnet durch** einen an der Übertragungseinrichtung (12) angeordneten Schwingungsaufnehmer (41) zur Ermittlung der Schwingungen der Übertragungseinrichtung (12).

13. Seismische Quelle (1) nach Anspruch 12, **dadurch gekennzeichnet, dass** der Schwingungsaufnehmer (41) ausgangsseitig mit dem Eingang einer Regeleinrichtung (40) zur Steuerung des Schwingungserzeugers (2) verbunden ist.

14. Seismische Quelle (1) nach einem der vorhergehenden Ansprüche, **dadurch gekennzeichnet, dass** der Schwingungserzeuger (2) ein elektromechanischer, ein hydromechanischer, ein piezoelektrischer oder ein magnetostriktiver Schwingungserzeuger (2) ist.

15. Seismische Quelle (1) nach einem der vorhergehenden Ansprüche, **dadurch gekennzeichnet, dass** der Schwingungserzeuger (2) eine Masse und eine Gegenmasse aufweist, wobei die Masse starr mit der Übertragungseinrichtung (12) verbunden ist und die Gegenmasse in der Schwingungsrichtung des Schwingungserzeugers (2) frei beweglich ist.

16. Seismische Quelle (1) nach einem der Ansprüche 3 bis 15, **dadurch gekennzeichnet, dass** die Stützeinrichtung (23) drehbar gelagert ist, so dass die Stützeinrichtung (23), die Übertragungseinrichtung (12) und der Schwingungserzeuger (2) um eine Achse gedreht werden können, die senkrecht zu der Oberfläche des Untersuchungsobjekts (3) steht.

17. Maschine mit einer drehbaren Lagerung, an der die Stützeinrichtung (23) der seismische Quelle (1) nach einem der Ansprüche 1 bis 16 befestigt ist, so dass die Seismische Quelle (1) um eine im Wesentlichen senkrecht zu der Oberfläche des Untersuchungsobjekts (3) stehenden Achse drehbar ist.

18. Verwendung einer seismischen Quelle (1) nach einem der Ansprüche 1 bis 16 zur Erzeugung von seismischen Schwingungen, insbesondere von Scherwellen (4), in dem Untersuchungsobjekt (3).

19. Verfahren zur Erzeugung von seismischen Schwingungen in Form von Scherwellen (4) in einem Untersuchungsobjekt (3), mit den folgenden Schritten:
a) Erzeugung von mechanischen Anregungen durch eine Anregungsquelle (2) mit einer Anregungsrichtung, die im Wesentlichen parallel zu der Oberfläche des Untersuchungsobjekts (3) ausgerichtet ist,
b) Übertragen der Anregungen zu dem Untersuchungsobjekt (3) mittels einer mit der Anregungsquelle (2) mechanisch verbundenen Übertragungseinrichtung (12), wobei die Übertragungseinrichtung (12) ein Kontaktelement (14) umfasst,
c) Vorspannen der Übertragungseinrichtung (12) gegenüber dem Untersuchungsobjekt (3) über zwei im Wesentlichen parallel zur Oberfläche des Untersuchungsobjekts (3) verschiebliche Lager (20) und
d) Aufsetzen des Kontaktelements (14) auf die Oberfläche des Untersuchungsobjekts (3), um die Anregungen reibschlüssig in das Untersuchungsobjekt (3) einzukoppeln, wobei das Kontaktelement (14) mit einer Fläche auf das Untersuchungsobjekt (3) aufgesetzt wird, deren Längenausdehnung kleiner ist als der größte Abstand zwischen zweien der mindestens zwei Lager (20),
**dadurch gekennzeichnet, dass**
e) die Anregungen kontinuierliche mechanische Schwingungen sind.

20. Verfahren nach Anspruch 19, **gekennzeichnet durch** folgenden Schritt: Anordnen des Kontaktelements (14) an der Übertragungseinrichtung (12) mit einer starren und/oder lösbaren Befestigung (15, 16).

21. Verfahren nach Anspruch 20, **gekennzeichnet durch** folgenden Schritt: Ermittlung einer Schwingungszustandsgröße, welche die Schwingungen der Übertragungseinrichtung (12) als Antwort auf eine Schwingungsstellgröße des Schwingungserzeugers (2) wiedergibt.

22. Verfahren nach Anspruch 21, **gekennzeichnet durch** folgenden Schritt: Vergleich der ermittelten Schwingungszustandsgröße mit der Schwingungsstellgröße und Ansteuern des Schwingungserzeugers (2) in Abhängigkeit von dem Ergebnis des Vergleichs.

23. Verfahren nach einem der Ansprüche 19 bis 22, **gekennzeichnet durch** folgenden Schritt: Vorgabe einer periodischen Schwingungsstellgröße mit einer variablen Frequenz für den Schwingungserzeuger (2).

24. Verfahren nach einem der Ansprüche 19 bis 23, **gekennzeichnet durch** folgenden Schritt: Aufbringen der Vorspannung auf die Lager (20) **durch** eine an den Lagern (20) befestigte Stützeinrichtung (23), die zum Aufbau der Vorspannung eine Andrückeinrichtung umfasst.

25. Verfahren nach Anspruch 24, **gekennzeichnet durch** folgenden Schritt: Regelung der Kraft der Vorspannung mit einer mit der Andrückeinrichtung (32) verbundenen Kraftregelung.

26. Verfahren nach Anspruch 24 oder 25, **dadurch gekennzeichnet, dass** die Andrückeinrichtung (32) hydraulisch oder pneumatisch betrieben ist.
